# EUROPEAN PATENT APPLICATION

(11) **EP 4 738 094 A1**
(43) Date of publication of application: **06.05.2026**
(21) Application number: 24210507.0
(22) Date of filing: 04.11.2024
(51) Int. Cl.: G06F 3/14

(54) **SYSTEM FOR INTERFACING MULTIPLE DISPLAYS TO A DISPLAY DRIVING APPARATUS**

(71) Applicant: Koninklijke Philips N.V., 5656 AG Eindhoven (NL)
(72) Inventor: VAN ACHT, Victor Martinus Gerardus, Eindhoven (NL); SPRINGER, Rink Peter Wycher, Eindhoven (NL)
(74) Representative: Philips Intellectual Property & Standards

(57) **Abstract**

A display forms part of a set of at least two displays. The displays of the set are for connection to a common image supplying apparatus. The display comprises a rewritable memory storing position data indicating a position of the display relative to the other displays of the set and orientation data indicating an orientation of the display. In this way, information stored at the display can be used to configure an image supplying apparatus to supply image data which is appropriate for the positions and orientations of the multiple displays.

## Description

### FIELD OF THE INVENTION

This invention relates to the driving of multiple displays from a common image supplying apparatus. For example, it relates to a conference room type setup, with multiple displays controlled by a single image supplying apparatus such as a laptop.

### BACKGROUND OF THE INVENTION

Displays are typically connected to an image supplying apparatus using the HDMI interface. The HDMI standard also provides a back-channel through which the image supplying apparatus, e.g., laptop, is able to obtain information about the display.

For example, the HDMI standard supports the Display Data Channel (DDC), which in its later versions supports DisplayID. Via DisplayID, a laptop can obtain all kinds of information about the display, for example the resolution, the aspect ratio, the maximum refresh rate, etc.

Modern laptops support multiple displays connected concurrently, where the screen of each display is able to display different image content. For example, in the Windows operating system, the feature can be used by enabling the feature "Extend desktop to this display".

The Windows operating system also provides an intuitive user interface to configure the relative position and orientation (landscape/portrait) of the screens that are connected to the laptop.

The way screens are placed relatively to each other (left / right) and how the screens are oriented (landscape / portrait left/ portrait right/ up side down/ mirrored/ ....) may be considered to be a property of the room in which the displays are located. It is not a property of the laptop, because a laptop can easily be carried to another room where the available displays have a different setup and orientation. It is also not a property of the display output port number of the laptop, because HDMI cables can be connected to any output ports.

When using a laptop in a meeting room that has multiple displays, a first task is to configure the image supplying apparatus, for example via the Windows operating system, for the correct display positions and orientations. If some screens are in portrait orientation, the configuration becomes more complicated, because moving the mouse up and down (in a landscape configuration) results in moving the mouse pointer on the screen left and right. This makes maneuvering the mouse pointer to the correct buttons on the Windows desktop complicated.

This configuration task needs to be performed each time the meeting room is used.

There is therefore a need for an improved way to configure an imaging suppling apparatus to interface with multiple displays.

### SUMMARY OF THE INVENTION

The invention is defined by the claims.

According to examples in accordance with an aspect of the invention, there is provided a display which forms part of a set of at least two displays positioned in a geometrical configuration in a viewing location, wherein the displays of the set are for connection to a common image supplying apparatus, the display comprising:
a rewritable memory storing position data indicating a position of the display relative to the other displays of the set and orientation data indicating an orientation of the display.

This display has a rewritable memory for storing the relative position of the display within a set of displays. For example, there may be a set of two or three displays arranged side by side in a meeting room. In order to enable an image supplying apparatus to drive all the displays taking into account their relative positions and orientations, the memory is arranged to be read to obtain the position and orientation data. This data is then used by the image supplying apparatus when supplying the at least two displays with images. This enables the image supplying apparatus to interface most effectively, for example ensuring that a mouse pointer moves between screens of the displays in a desired manner and the displayed data matches the orientation (portrait or landscape) of the displays.

Configuring the displays in this way, only needs to be done only once (for example by the person who installs the displays in the room) and not again and again by each separate user of the displays in the room.

The displays may be side by side, or one above the other, or a combination of positions.

It is noted that the orientation of a display relates in particular to the orientation of the screen area, such as portrait or landscape.

The position data and orientation data may be considered to comprise room configuration data, in that it relates to the way the display fits into the layout of multiple displays in a room.

The position data for example indicates a layout of all displays of the set and indicates the location, within the layout, of the particular display.

In another example, the position data may indicate a grid position (such as row 1 column 2) but without indicating how many rows and columns there are in total.

The relative position information and orientation information is stored in the display (i.e., in any component that may be considered to be part of the display), instead of (or as well as) in the image supplying apparatus (e.g. a laptop). Every time the image supplying apparatus is connected to a display, the room configuration information is retrieved from the display. This may take place via HDMI, DDC, or Display ID. The image supplying apparatus, for example a laptop using an operating system, may then be configured automatically and appropriately for the displays in the room.

As a minimum, one display can store its own position relative to the other displays and its own orientation. When data is read from all of the displays of the set, the full room configuration is known. However, in another implementation, each display stores all relevant information, namely the location within the set and the orientation of every display in the set.

The displays of the set may display independent information, such as different video conference feeds, or a video conference feed on one screen and notes on another. Alternatively, the displays may display different portions of an overall larger image, forming a tiled display. In this case, the spacing between displays (and in particular between the screen areas) is also relevant. In another example, the multiple displays may display the same content, for example if different displays are visible from different locations within a large room, or in non-rectangular room. Thus, the display content is mirrored (i.e. duplicated) between multiple displays.

The memory may further store identification data which identifies the displays of the set. In this way, the imaging supplying apparatus can learn, from any one display of the set, how many displays there are in the set. The identification data, for example comprises a serial number for each display. Thus, one display tells an imaging supplying apparatus (that is reading the memory of the display) the identities of all displays of the set. In this way, the image supplying apparatus can verify when all displays of the set are connected to the image supplying apparatus.

The memory for example stores:
position data indicating a position of each display of the set relative to all other displays of the set; and
orientation data indicating an orientation of each display of the set.

It is noted that the position of each display may be a relative position, such as the position within a grid (e.g., top left), rather than the absolute spatial position. However, a finer grid will allow more accurate position information.

The memory may stored a display identity of another display which is to have the same image content mirrored to it.

In this example, each display is able to report the full configuration, namely the relative position and orientation of all displays of the set and the display identities. This means when one display is connected to the image supplying apparatus, the image supplying apparatus will determine that the display is one of a set, and it will know the identities, relative positions and orientations of the other displays of the set that should be connected to the image supplying apparatus.

The display may comprise a detection system for automatic detection of the display orientation. In this way, a user may for example rotate a display, and this may then prompt an active communication towards the image suppling apparatus. The displays may for example be mounted on arms, so that they can be moved and rotated, for example changing the room layout in respect of the display orientations. This simplifies the installation process in that the display orientation is learned automatically.

The invention also provides an image supplying apparatus for supplying images to a set of displays, comprising:
a receiver for receiving, from at least one display, position data indicating relative positions of the displays of the set and orientation data indicating orientations of the displays of the set; and
a transmitter for transmitting image data to the displays with a configuration applied that depends on the relative positions and the orientations.

The image supplying apparatus supplies image data to the multiple displays, using information obtained from at least one of the displays which enables the display positions and orientations to be derived.

The receiver, for example comprises firmware which has access to a HDMI return channel driver inside the display.

It is noted that the position data and orientation data may be received directly from the display, but it may be received at the image supplying apparatus via an intermediary. However, the position data and orientation data originates at, and is stored at, a component that may be considered to be part of the display.

The receiver may be further for receiving identification data which identifies the displays of the set.

The transmitter is for example configured to apply the configuration only when all displays of the set have been connected to the apparatus. After a new display connection (e.g. HDMI connection; or Wi-Fi, etc.) has been detected by the image supplying apparatus, and the room configuration information has been read from the connected display, the image supplying apparatus may then check if all identified displays are connected. Only when this is the case, the room configuration will be applied. While this is not the case, a query may be issued to the user after a timeout, to determine if a partial configuration should be applied or not.

The image supplying apparatus may for example detect when the connected displays are on or off. An automatic reconfiguration may take place when a display is detected but turned off. For example, if two relatively adjacent displays are on, they may reconfigured (as the partial reconfiguration) as left and right displays even though others of the set are not in use. If there is a middle display that is turned off, a warning may be more appropriate than showing a strongly split view)

The transmitter is for example configured to apply the configuration only when all displays of the set of displays have non-contradictory position data and orientation data.

The driving apparatus in this way checks if the room configuration that is read back from all displays is equal. Only if this is the case, the room configuration will be applied.

The transmitter is for example further configured to transmit to the display position data that indicates a position of each display relative to the other displays of the set and orientation data that indicates orientations of the displays of the set.

The room configuration can in this way be stored in a display by uploading the information from the image supplying apparatus (e.g. using an operating system) when the display position and/or orientation has been modified by the user using a user interface of the image supplying apparatus.

The invention also provides a method of configuring a set of displays, wherein the displays of the set are for connection to a common image supplying apparatus, the method comprising:
in at least one display, storing position data indicating a position of the display relative to the other displays of the set and orientation data indicating an orientation of the display.

The method may comprise, in at least one display, storing:
position data indicating a position of each display of the set relative to all other displays of the set;
identification data which identifies each display of the set; and
orientation data indicating an orientation of each display of the set.

The method may be implemented by the image supplying apparatus. Thus, the image supplying apparatus, such as a laptop, configures the display, for example using an operating system.

The method may then further comprise receiving information from a display of the set indicating a change in the position of the displays relative to each other and/or a change in orientation of at least one display. In this way, a reconfiguration may be triggered to take place based on information received from a display.

The invention also provides a computer program comprising computer program code which is adapted, when said program is run on a computer, to implement the method described above.

The invention also provides a method of driving a set of displays, comprising:
receiving, from at least one display, position data indicating relative positions of the displays of the set and orientation data indicating an orientation of the displays of the set; and
transmitting image data to the displays with a configuration applied that depends on the relative positions and the orientations.

The invention also provides a computer program comprising computer program code which is adapted, when said program is run on a computer, to implement the method described above.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows a set of displays connected to a common image supplying apparatus;
Fig. 2 shows how an image buffer may store image data for multiple displays;
Fig. 3 shows a method of configuring a set of displays; and
Fig. 4 shows a method of driving a set of displays.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a display that forms part of a set of at least two displays. The displays of the set are for connection to a common image supplying apparatus. The display comprises a rewritable memory storing position data indicating a position of the display relative to the other displays of the set and orientation data indicating an orientation of the display. In this way, information stored at the display can be used to configure an image supplying apparatus to supply image data which is appropriate for the positions and orientations of the multiple displays.

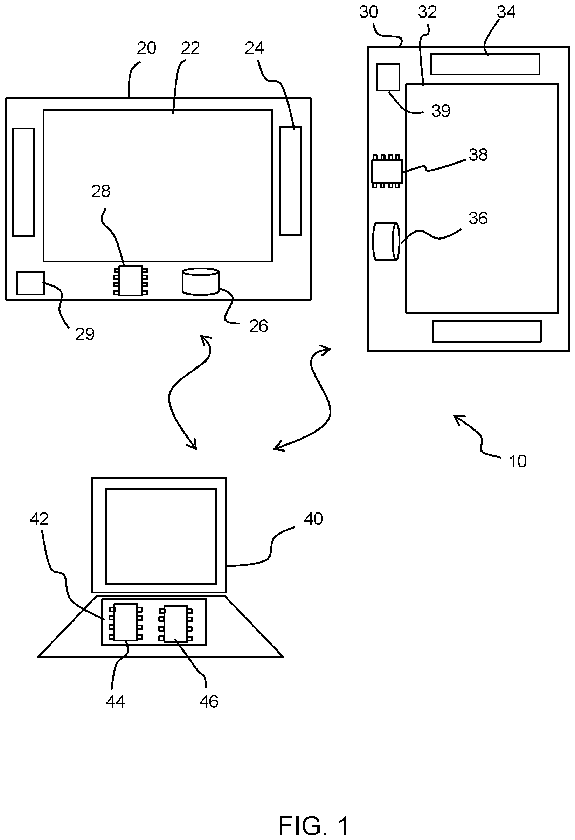

Fig. 1 shows a set 10 of two displays 20, 30 positioned in a geometrical configuration in a viewing location. There may be more than two displays in the set. Each display is connected to an image supplying apparatus, such as a laptop 40. The connections between the laptop 40 and the displays are for example made via HDMI interfaces. There may be physical cables connected to the displays, or a wireless HDMI standard may be used, such as a Wi-Fi based HDMI standard.

Each display 20, 30 has a screen area 22, 32. Speakers 24, 34 are also shown. In the example shown, the first display 20 has the screen in landscape orientation and the second display 30 has the screen 32 in portrait orientation. The positions and orientations of the displays may be considered to be part of a room layout.

Each display has a rewritable memory 26, 36 storing position data indicating a position of the display relative to the other displays of the set and orientation data indicating an orientation of the display.

Each display also comprises a transmitter 28, 38 for transmitting information from the memory 26, 36 to the laptop 40 when the laptop requests reading of the memory.

The laptop 40 has a communications system 42 including a receiver 44 for receiving from a display the information from the display memory, namely the position data and the orientation data. The communications system also includes a transmitter 46 for transmitting image data to the displays with a configuration applied that depends on the relative positions and the orientations. The communication is, for example implemented using the HDMI interface.

In this way, by reading the data in memory, the laptop 40 can automatically configure the display output to match the room layout. This for example ensures that a mouse pointer moves between the screens of the displays in a desired manner and the displayed data matches the orientation of the displays.

Configuring the displays has to be done only once (for example by the person who installs the displays in the room) and not again and again by each separate user of the displays in the room.

In a most basic implementation, each display only needs to store its own orientation and its position within the set of displays (for example row 1 column 1 for the display 20 and row 1 column 2 for the display 30). This position information does not, in a most basic implementation, need to indicate the overall layout of the set of displays. When data is read from all of the displays of the set, the full room layout is known.

However, in a more advanced implementation, each display stores the full room layout, and this may also include identities of each display within the room layout.

The displays do not necessarily have the same size. For example, a larger display may be on the left and a smaller display may be on the right, both in landscape orientation. In this case, the top of the right display may be aligned with the top of the left display, or the bottom of the right display may be aligned with the bottom of the left display. Thus, the relative positions are not uniquely described simply by a coarse grid location. Instead, more accurate position information may be stored that defines the precise positional relationship between the displays. This may for example be achieved by defining a spatial position of a point of the display screen (e.g. top left or the center of the screen) relative to a reference point. Thus a reference grid may be defined with a much smaller pitch than the pitch of the display screens.

The relative position information and orientation information is stored in the display (i.e., in any component that may be considered to be part of the display), instead of (or as well as) in the image supplying apparatus (e.g. a laptop). Every time the image supplying apparatus is connected to a display, the room configuration information is retrieved from the display. This may take place via HDMI, DDC, or Display ID.

The room configuration information can be stored in the displays by uploading the information by the operating system of the laptop 40 when the screen position and orientation has been modified by the user.

Conventionally, DisplayID only contains information about a single display from which the DisplayID information has been retrieved. The DisplayID data fields may therefore be extended with a 'room configuration' data item, and this may (in the more advanced implementation) be copied equally between all displays of the set.

The room configuration information preferably also has references to the serial numbers of the different displays in the room. One of the serial numbers will be the serial number of the particular screen itself.

The relative positions of the screens may then be expressed according to their serial number. For example: "Serial number 111-222 is located at x=0, y=0. Serial number 333-444 is located at "x=1, y=0. Serial number 555-666 is located at x=2, y=0." It is noted that the screen of the laptop 40 is not part of the room configuration data.

In practice, not all HDMI cables of all screens will be inserted by the user exactly at the same time, or detected by the operating system of the laptop 40 exactly at the same time. After a new HDMI connection has been detected by the operating system of the laptop 40, and the DisplayID information, including the room configuration information, has been read out, the operating system may then check if all serial numbers that are referenced by the room configuration are connected. Only when this is the case, the room configuration should be implemented by the operating system.

As long as this is not the case, the room configuration may be ignored, or possibly a query may be issued to the user after a timeout as to whether a partial configuration (for the detected displays) should be applied or not.

The operating system may also check if the room configuration that is read back from all displays of the set is exactly equal. If this is the case, the room configuration should be applied. If it is not the case, the room configuration may again be ignored.

The room configuration is for example written to the memory of the displays by the operating system of the laptop 40 as soon as the user has changed the screen configuration. In practice, this means that the very first user of the room (typically the person who installs the screens in the room) has to configure the displays using the operating system in conventional manner, such that images are displayed correctly across the set of screens. After than initial configuration, the settings will be automatically applied for future users.

It is noted that when writing the room configuration to the displays, the operating system will not include any information (e.g., the serial number) of the laptop 40. This prevents incomplete room configuration if another laptop is connected to the displays in the room.

If, for whatever reason, something goes wrong with the room configuration, it can always be restored by reconfiguring the displays using the operating system.

There may be other ways to store the room configuration information in the displays, for example using menu structures of the displays themselves. This will however be less user-friendly and less intuitive than using the operating system of the laptop.

The room configuration information may include additional information, such as:
screen mirroring (relevant for systems that project through a screen, instead of on a screen);
partly overlapping screens;
screen dimensions (relevant for multiple projection systems, at different distances from the projector screen);
screen bezel size;
number of pixels (horizontal and vertical).

The room configuration information, for example implemented as enhanced DisplayID information, needs to be writable. This is again different to the current implementation of DisplayID which is programmed only once, by the manufacturer of the display at the time of production of the screen.

An optional additional feature is the automatic detection of portrait / landscape mode. For this purpose, an orientation sensor 29, 39 is shown for each display, such as an accelerometer to automatically determine and update the portrait/landscape/upside-down mode. This would save the first user of the room from adjusting this manually.

Some image supplying apparatus only supports the connection of one external screen (such as phones and tablets). For this kind of device, the relative position of the screen might not be relevant, however some of the other information mentioned above will still be of interest, such as screen orientation and screen mirroring. The room configuration information (even for a single display) may be used by the operating system of the image supplying apparatus to correctly display image content on the single external display (and for example not upside down).

The displays may be connected wirelessly as mentioned above, for example over Wi-Fi. The DisplayID information of the display (which includes the room configuration information) may for example be read out using a wireless display adaptor. This information is then conveyed to the image supplying apparatus via the wireless display adapter protocol. Alternatively, the room configuration information may be partly stored in the wireless display adapter (rather than with the display screen). The wireless display adapter may then be considered to be part of the display.

The image supplying apparatus may use one or more screen buffers for storing pixels which are to be shown on the displays. For example, one large screen buffer (memory) may be used to store pixel colors of all displays together, in their correct configuration (position and orientation). The overall screen buffer is maintained in memory and managed by the image supplying apparatus, by writing to the buffer using a graphics processing unit.

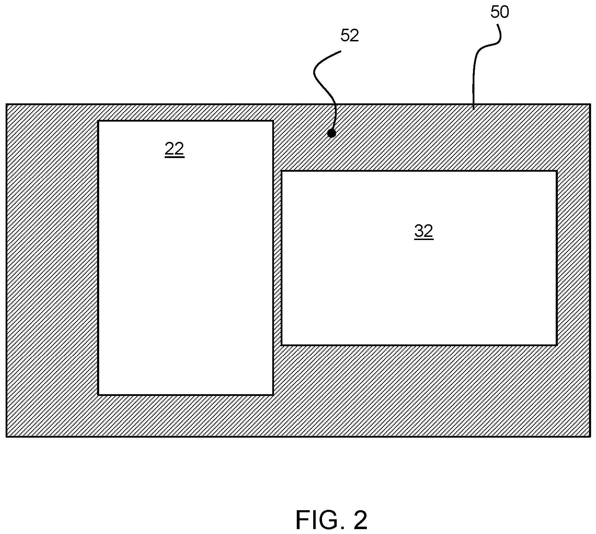

Fig. 2 shows an image area 50 which may be stored in an image buffer. The image area includes the areas of the two screens 22, 32. Thus, a part of the image buffer is applied to the first screen and a part of the image buffer is applied to the second screen. A non-displayed area 52 lies outside the two screen areas. The image supplying apparatus should not provide visual data for that area.

If there are a landscape display and a portrait display side-by-side that are together functioning as a single display, the imaging supplying apparatus may also avoid displaying image content at the top of the portrait display if it lies above top of the landscape display, or content at the bottom of the portrait display if it lies below the bottom of the landscape display. Thus, a rectangular display area may be defined across the two display screens. The same may apply to display with the same orientation but different sizes.

When the multiple displays are displaying shared content, i.e. different parts of an overall image, the absolute positions of the displays may be required. It may for example be assumed that the displays are butted against each other. In this case, the bezel size of the screens may be provided as part of the room configuration information store in each display, so that the gap between the screen edges is known.

There may be a master/slave relationship between displays, and they may be reported as a single display by the master display. For example, the master of two VxH displays may be identified as a Vx2H display, behaving together as horizontally side-by-side displays. The first (master) display on the left could communicate to the right half of the double size image to slave display on the right.

In a master slave arrangement, details of the identification of all displays may thus not been needed.

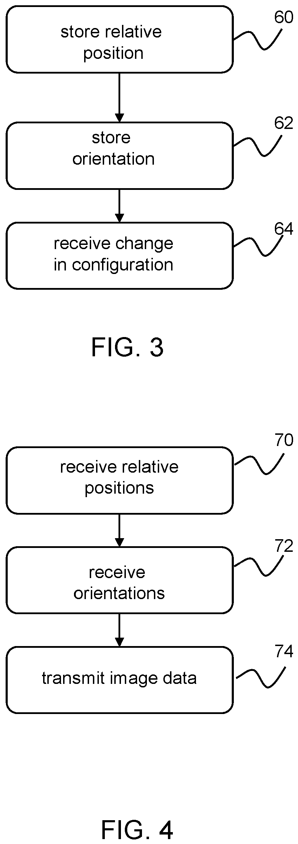

Fig. 3 shows a method of configuring a set of displays.

In step 60, position data is stored in each display indicating a position of the display relative to the other displays of the set.

In step 62, orientation data is stored in each display indicating an orientation of the display.

As explained above, in a preferred implementation, each display may store the position and orientation information for all displays of the set.

In step 64, a change in configuration may be received at the image supplying apparatus. This may be automatically generated in response to detection of a rotation of one of the displays.

Fig. 4 shows a method of driving a set of displays.

In step 70, position data is received from at least one display, indicating relative positions of the displays of the set.

In step 72, orientation data is received indicating an orientation of the displays of the set.

In step 74, image data is transmitted to the displays with a configuration applied that depends on the relative positions and the orientations.

The methods can be implemented by software, such as software running on the operating system of the image supplying device and software implementing the HDMI interface of the display.

The invention may be implemented by any connection protocol between an image supplying apparatus and multiple displays. The protocol requires a back channel from the displays back to the image supplying apparatus so that the position and orientation information can be read. Thus, the invention may be implemented using connection protocols with such a back channel or using modified protocols that do not yet have such a back channel. Further examples of connection protocols are VGA, DVI, DisplayPort, USB and Thunderbolt.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A display (20) which forms part of a set (10) of at least two displays (20, 30) positioned in a geometrical configuration in a viewing location, wherein the displays of the set are for connection to a common image supplying apparatus (40), the display comprising:
a rewritable memory (26) storing position data indicating a position of the display relative to the other displays of the set and orientation data indicating an orientation of the display.

2. The display of claim 1, wherein the memory (26) further stores identification data which identifies the displays of the set.

3. The display of claim 2, wherein the memory (26) stores:
position data indicating a position of each display of the set relative to all other displays of the set; and
orientation data indicating an orientation of each display of the set.

4. The display of any one of claims 1 to 3, comprising a detection system (29) for automatic detection of the display orientation.

5. An image supplying apparatus (40) for supplying images to a set of displays, comprising:
a receiver (44) for receiving, from at least one display, position data indicating relative positions of the displays of the set and orientation data indicating orientations of the displays of the set; and
a transmitter (46) for transmitting image data to the displays with a configuration applied that depends on the relative positions and the orientations.

6. The apparatus of claim 5, wherein the receiver is further for receiving identification data which identifies the displays of the set.

7. The apparatus of claim 6, wherein the transmitter is configured to apply the configuration only when all displays of the set have been connected to the apparatus.

8. The apparatus of claim 7, wherein the transmitter is configured to apply the configuration only when all displays of the set of displays have non-contradictory position data and orientation data.

9. The apparatus of any one of claims 5 to 8, wherein the receiver comprises an HDMI interface.

10. The apparatus of any one of claims 5 to 9, wherein the transmitter is further configured to transmit to the display position data that indicates a position of each display relative to the other displays of the set and orientation data that indicates orientations of the displays of the set.

11. A method of configuring a set of displays, wherein the displays of the set are for connection to a common image supplying apparatus, the method comprising:
in at least one display, storing position data indicating a position of the display relative to the other displays of the set and orientation data indicating an orientation of the display.

12. The method of claim 11, comprising, in at least one display, storing:
position data indicating a position of each display of the set relative to all other displays of the set;
identification data which identifies each display of the set; and
orientation data indicating an orientation of each display of the set.

13. The method of claim 11 or 12 implemented by the image supplying apparatus.

14. The method of claim 13, further comprising:
receiving information from a display of the set indicating a change in the position of the displays relative to each other and/or a change in orientation of at least one display.

15. A computer program comprising computer program code which is adapted, when said program is run on a computer, to implement the method of any one of claims 11 to 14.

16. A method of driving a set of displays, comprising:
receiving, from at least one display, position data indicating relative positions of the displays of the set and orientation data indicating an orientation of the displays of the set; and
transmitting image data to the displays with a configuration applied that depends on the relative positions and the orientations.

17. A computer program comprising computer program code which is adapted, when said program is run on a computer, to implement the method of claim 16.
